# EUROPEAN PATENT APPLICATION

(11) **EP 4 841 778 A1**
(43) Date of publication of application: **18.11.2026**
(21) Application number: 25758522.4
(22) Date of filing: 23.01.2025
(51) Int. Cl.: H01M 50/256, H01M 50/627, H01M 50/691

(54) **CONTAMINATION-RESISTANT BATTERY CELL CARRIER**

(30) Priority: 19.02.2024 KR 20240023485
(71) Applicant: LG Energy Solution, Ltd., Seoul 07335 (KR)
(72) Inventor: HAN, Myoung Dae, Daejeon 34122 (KR); SHIM, Kyuhun, Daejeon 34122 (KR); HA, Jaesung, Daejeon 34122 (KR)
(74) Representative: Goddar, Heinz J.
(86) International application number: PCT/KR2025/001321
(87) International publication number: WO 2025/178274

(57) **Abstract**

The present invention provides a contamination-resistant battery cell carrier comprising: a lower carrier (100) including a lower plate (110) on which one or more battery cells (50) are mounted; and an upper carrier (200) including an upper plate (210) that is disposed above the lower carrier (100) and the one or more battery cells (50) and is coupled to the lower carrier (100), one or more hoppers (220) that are arranged to pass through the upper plate (210) and respectively contact the one or more battery cells (50), and a barrier (230) that is formed to protrude upward from the upper plate (210). Each of the one or more hoppers (220) may be open at the top and bottom and may include an upper injection port (222) that contacts an electrolyte injector and a lower injection port (224) that contacts a respective battery cell (50). Accordingly, an electrolyte may be injected into each battery cell (50) via each hopper (220), or the electrolyte inside each battery cell (50) may leak or splash to the outside of the battery cell (50). The barrier (230) may entirely surround the one or more hoppers (220).

## Description

### [TECHNICAL FIELD]

This application claims the benefit of priority based on Korean Patent Application No. 10-2024-0023485 filed on February 19, 2024, entire content disclosed in the document of the patent applications is included as a part of this specification.

The present invention relates to a contamination-resistant battery cell carrier wherein even when the electrolyte contamination occurs, the manufacturing process of the battery cell may not need to be halted, the carrier may not need to be cleaned frequently such that the cleaning cycle may be extended and cleaning may be facilitated.

### [BACKGROUND ART]

Generally, secondary lithium batteries are manufactured by performing: an injection process wherein an electrode assembly constituted by a cathode, anode and separator is embedded in a cylindrical or square metal can and then electrolyte is injected into the can; and an activation process wherein a battery is activated by a predetermined charge and discharge. In order to increase productivity in such injection process and activation process, used is a battery cell carrier allowing simultaneous injection into multiple cells and simultaneous charge and discharge of the multiple cells, and facilitating transport of multiple cells.

The battery cell carrier may include: a lower carrier where a plurality of battery cells are mounted; and an upper carrier where a plurality of hoppers are installed and coupled to the lower carrier. Each of the plurality of hoppers may include an upper injection port in contact with an electrolyte injector and a lower injection port in contact with the plurality of battery cells. Electrolyte may be injected into the plurality of battery cells through the plurality of hoppers, respectively. In addition, since the hopper is open in vertical direction, the internal pressure of the battery cell may be increased or decreased within the chamber for the activation process. That is, the injection process and the activation process may be performed with the plurality of battery cells mounted on the battery cell carrier.

When the injection process and the activation process are performed with the plurality of battery cells mounted on the battery cell carrier, there is an advantage of improved productivity. However, since the hopper of the battery cell carrier is interposed between the battery cell and the electrolyte injector, the electrolyte leakage area (lower injection port and upper injection port) increases, which leads to aggravated electrolyte contamination of the process equipment and the battery cell carrier, thereby the process needs to be halted and the electrolyte-contaminated process equipment or carrier needs to be cleaned frequently. As a result, the manufacturing cost of the battery cell and the maintenance cost of the process equipment or carrier increase.

When the carrier contaminated with electrolyte is not cleaned, problems such as weakened adhesion between the hopper and the battery cell, failure or instability in the coupling/separation of the carrier and the transport apparatus, failure or instability in the coupling /separation of the upper carrier and the lower carrier, and damage, deformation and increased wear of the carrier may occur.

Therefore, a contamination-resistant battery cell carrier that eliminates or reduces the above-mentioned problems arising from the use of the battery cell carrier is required. The pertinent prior art document is Korean Patent Publication No. 10-2019-0094830.

### [DISCLOSURE]

### [TECHNICAL PROBLEM]

In order to solve the above-mentioned problems, it is an object of the present invention to provide a contamination-resistant battery cell carrier wherein even when the electrolyte contamination occurs, the manufacturing process of the battery cell 50 may not need to be halted, the carrier 10 may not need to be cleaned frequently such that the cleaning cycle may be extended and cleaning may be facilitated.

It is an object of the present invention to provide a contamination-resistant battery cell carrier wherein battery cell productivity is improved and the maintenance cost of the manufacturing equipment or carrier and the manufacturing cost of the battery cell are reduced.

It is an object of the present invention to provide a contamination-resistant battery cell carrier capable of preventing failure or instability in the coupling or separation of the carrier and the transport apparatus due to electrolyte contamination.

It is an object of the present invention to provide a contamination-resistant battery cell carrier that allows stable electrolyte injection even when electrolyte contamination occurs and prevents or reduces leakage or diffusion of electrolyte during electrolyte injection or impregnation.

It is an object of the present invention to provide a contamination-resistant battery cell carrier that solves or alleviates the problem of not being able to align and couple or stably align and couple the upper carrier and the lower carrier due to electrolyte contamination, and the problem of damage, deformation or wear of upper carrier or lower carrier caused by applying excessive force to align and couple the upper carrier and the lower carrier due to the alignment and coupling failure or instability.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve the above-described problems, the present invention provides a contamination-resistant battery cell carrier 10 including: a lower carrier 100; and an upper carrier 200.

The lower carrier 100 may include: a lower plate 110 on which one or more battery cells 50 are mounted.

The upper carrier 200 may include: an upper plate 210; one or more hoppers 220; and a barrier 230.

The upper plate 210 may be disposed above the lower carrier 100 and the one or more battery cells 50.

The upper plate 210 may be coupled to the lower carrier 100.

The one or more hoppers 220 may be disposed through the upper plate 210.

The one or more hoppers 220 may be in contact with the one or more battery cells 50, respectively.

The barrier 230 may be formed to protrude upward from the upper plate 210.

Each of the one or more hoppers 220 may be open vertically.

Each of the one or more hoppers 220 may include an upper injection port 222 and a lower injection port 224.

The upper injection port 222 may be in contact with the electrolyte injector.

The lower injection port 224 may be in contact with each of the one or more battery cells 50.

Accordingly, through each of the one or more hoppers 220, an electrolyte is injected into each of the one or more battery cells 50, or the electrolyte in each of the one or more battery cells 50 leaks or diffuses out of each of the one or more battery cells 50.

The barrier 230 may surround the one or more hoppers 220 as a whole.

In addition, in order to solve the above-described problem, the present invention provides a contamination-resistant battery cell carrier 10 including: a lower carrier 100; and an upper carrier 200.

The lower carrier 100 may include: a lower plate 110 on which one or more battery cells 50 are mounted.

The upper carrier 200 may include: an upper plate 210; and one or more hoppers 220.

The upper plate 210 may be disposed above the lower carrier 100 and the one or more battery cells 50.

The upper plate 210 may be coupled to the lower carrier 100.

The one or more hoppers 220 may be disposed through the upper plate 210.

The one or more hoppers 220 may be in contact with the one or more battery cells 50, respectively.

Each of the one or more hoppers 220 may be open vertically.

Each of the one or more hoppers 220 may include an upper injection port 222 and a lower injection port 224.

The upper injection port 222 may be in contact with the electrolyte injector.

The lower injection port 224 may be in contact with each of the one or more battery cells 50.

Accordingly, through each of the one or more hoppers 220, an electrolyte is injected into each of the one or more battery cells 50, or the electrolyte in each of the one or more battery cells 50 leaks or diffuses out of each of the one or more battery cells 50.

The lower carrier 100 or the upper carrier 200 may include a coupling part 240.

The coupling part 240 may be disposed at an edge of the lower plate 110 or the upper plate 210.

The coupling part 240 may be configured to couple to a transport apparatus.

The lower plate 110 or the upper plate 210 may include a discharge hole 212.

The discharge hole 212 may be formed inner than the coupling part 240.

The discharge hole 212 may be open in a vertical direction.

In an embodiment, the coupling part 240 may include a coupling hole 242.

The coupling hole 242 may be formed to penetrate in a direction intersecting the vertical direction and extending from an outer side to an inner side of the lower plate 110 or the upper plate 210.

The coupling hole 242 may communicate with the discharge hole 212.

In an embodiment, the coupling hole 242 may communicate with the discharge hole 212 in a direction in which the coupling hole 242 is formed to penetrate.

In an embodiment, the lower plate 110 may include one or more mounting grooves 112 with the one or more battery cells 50 inserted thereinto, respectively.

The lower carrier 100 may include one or more pushers 120.

The one or more pushers 120 may be disposed in the one or more mounting grooves 112, respectively, and each of the one or more pushers 120 may be disposed below each of the one or more battery cells 50 mounted in each of the one or more mounting grooves 112.

Each of the one or more pushers 120 may include: a mounting plate 122; and a first elastic member 124.

The mounting plate 122 may be disposed below each of the one or more battery cells 50.

Each of the one or more battery cells 50 may be mounted on the mounting plate 122.

The mounting plate 122 may be capable of moving up and down along an inner side surface of each of the one or more mounting grooves 112.

The first elastic member 124 may be disposed below the mounting plate 122.

The first elastic member 124 may apply pressure to the mounting plate 122 in upward direction.

The mounting plate 122 may include: a first chamfer C1 formed at an upper outer end portion to be inclined downward toward an outer side.

In an embodiment, the mounting plate 122 may include a second chamfer C2 formed at a lower outer end portion to be inclined upward toward an outer side.

In an embodiment, the lower carrier 100 may include one or more alignment members 130.

The one or more alignment members 130 may be formed to protrude upward from the lower plate 110.

The upper carrier 200 may include: one or more alignment holes 250.

The one or more alignment holes 250 may be formed to penetrate up and down through the upper plate 210.

The one or more alignment members 130 may be inserted or pass through the one or more alignment holes 250, respectively.

Each of the one or more alignment members 130 may include: an alignment guide 132; and an alignment fixer 134.

The alignment guide 132 may have a cross-sectional area gradually increasing from an upper end toward downward direction.

The alignment fixer 134 may extend downward from a lower end of the alignment guide 132.

The alignment fixer 134 may have a constant cross-sectional area vertically.

At least a portion of each of the one or more alignment holes 250 may have a cross-sectional shape and size corresponding to those of each of the alignment fixers 134 and be in contact with each of the alignment fixers 134.

In an embodiment, each of the alignment fixers 134 may be cylindrical and have a circular cross-section.

The at least a portion of each of the one or more alignment holes 250 may have a cross-sectional shape and size corresponding to those of each of the alignment fixers 134 and be in contact with each of the alignment fixers 134.

### [ADVANTAGEOUS EFFECTS]

According to the embodiments of the present invention, a contamination-resistant battery cell carrier may include: a lower carrier 100 including a lower plate 110 where one or more battery cells 50 are mounted; and an upper carrier 200 including: an upper plate 210 disposed above the lower carrier 100 and the one or more battery cells 50 and coupled to the lower carrier 100; one or more hoppers 220 disposed through the upper plate 210 in contact with the one or more battery cells 50, respectively; and a barrier 230 formed to protrude upward from the upper plate 210. Each of the one or more hoppers 220 may be open vertically and include: an upper injection port 222 in contact with an electrolyte injector; and a lower injection port 224 in contact with each of the one or more battery cells 50. As a result, through each of the one or more hoppers 220, an electrolyte may be injected into each of the one or more battery cells 50, or the electrolyte in each of the one or more battery cells 50 may leak or diffuse out of each of the one or more battery cells 50. The barrier 230 may surround the one or more hoppers 220 as a whole.

Accordingly, even if the electrolyte leaks or diffuses on the upper surface of the upper plate 210 when the electrolyte is injected into the battery cell 50 or the inside of the battery cell 50 is pressurized or depressurized, most of the leaked or diffused electrolyte gathers inside the barrier 230 such that the major area contaminated with the electrolyte may be limited and controlled. As a result, even when the electrolyte contamination occurs, the manufacturing process of the battery cell 50 may not need to be halted, the carrier 10 may not need to be cleaned frequently such that the cleaning cycle of the carrier 10 may be extended and cleaning may be facilitated. As a result, the productivity of the battery cell 50 may be improved, and the maintenance cost of the carrier 10 and the manufacturing cost of the battery cell 50 may be reduced.

In addition, the major area contaminated with the electrolyte may be limited to a certain area (e.g., inside the barrier 230) that is not affected by the electrolyte contamination, the problems caused by the electrolyte contamination may not occur or may be reduced despite the leakage or diffusion of the electrolyte. For example, problems such as failure or instability in the coupling/separation of the carrier 10 and the transport apparatus, weakening of the adhesion between the battery cell 50 and the hopper 220, failure or instability in the separation of the upper carrier 200, or increased wear of the alignment member 130 or the alignment hole 250 due to failure or instability in the separation of the upper carrier 200, due to electrolyte contamination, may not occur.

In addition, since the barrier 230 is formed to surround the one or more hoppers 220 as a whole, the area around the upper injection port 222 of each the one or more hoppers 220 where electrolyte leakage frequently occurs, may be easily isolated at low cost with a simple configuration, and the spread of electrolyte contamination may be effectively prevented.

According to the embodiments of the present invention, a contamination-resistant battery cell carrier may include: a lower carrier 100 including a lower plate 110 where one or more battery cells 50 are mounted; and an upper carrier 200 including: an upper plate 210 disposed above the lower carrier 100 and the one or more battery cells 50 and coupled to the lower carrier 100; and one or more hoppers 220 disposed through the upper plate 210 in contact with the one or more battery cells 50, respectively. Each of the one or more hoppers 220 may be open vertically and include: an upper injection port 222 in contact with an electrolyte injector; and a lower injection port 224 in contact with each of the one or more battery cells 50. Through each of the one or more hoppers 220, an electrolyte may be injected into each of the one or more battery cells 50, or the electrolyte in each of the one or more battery cells 50 may leaks or diffuse out of each of the one or more battery cells 50, The lower carrier 100 or the upper carrier 200 may include: a coupling part 240 disposed at an edge of the lower plate 110 or the upper plate 210 and configured to couple to a transport apparatus. The lower plate 110 or the upper plate 210 includes: a discharge hole 212 formed inner than the coupling part 240 and open in a vertical direction.

Accordingly, the electrolyte leaked or diffused from the inner side of the lower plate 110 or the upper plate 210 (e.g., the lower injection port 224 or the upper injection port 222) may be easily discharged out of the carrier 10 through the discharge hole 212 formed inner than the coupling part 240. As a result, the coupling or separation of the carrier 10 and the transport apparatus may be prevented from failing or becoming unstable since the electrolyte contamination of the coupling part 240 may be prevented or the degree of electrolyte contamination of the coupling part 240 may be reduced.

In addition, even when electrolyte contamination occurs in the coupling part 240 or its surroundings, the manufacturing process of the battery cell 50 may not need to be halted, the carrier 10 may not need to be cleaned frequently such that the cleaning cycle of the carrier 10 may be extended and cleaning may be facilitated. As a result, the productivity of the battery cell 50 may be improved, and the maintenance cost of the carrier 10 and the manufacturing cost of the battery cell 50 may be reduced.

According to the embodiments of the present invention, the coupling part 240 may include a coupling hole 242 formed to penetrate in a direction intersecting the vertical direction and extending from an outer side to an inner side of the lower plate 110 or the upper plate 210. The coupling hole 242 may communicate with the discharge hole 212.

Accordingly, even when leaked or diffused electrolyte flows into the coupling hole 242 of the coupling part 240, the electrolyte may be easily discharged out of the carrier 10 through the discharge hole 212. As a result, the coupling hole 242 may be prevented from being narrowed or blocked by the electrolyte, or the inner side surface of the coupling hole 242 may be prevented from being sticky due to the electrolyte, or the degree of such may be reduced. Accordingly, the coupling or separation of the carrier 10 and the transport apparatus may be prevented from failing or becoming unstable.

In addition, even when electrolyte contamination occurs in the coupling hole 242, the manufacturing process of the battery cell 50 may not need to be halted, the carrier 10 may not need to be cleaned frequently such that the cleaning cycle of the carrier 10 may be extended and cleaning may be facilitated. As a result, the productivity of the battery cell 50 may be improved, and the maintenance cost of the carrier 10 and the manufacturing cost of the battery cell 50 may be reduced.

In addition, foreign substances such as electrolyte inside the coupling hole 242 may be easily removed by pushing the foreign substances into the discharge hole 212 inside the coupling hole 242. As a result, since cleaning of the coupling hole 242 is facilitated, the maintenance cost of the carrier 10 and the manufacturing cost of the battery cell 50 may be reduced.

According to the embodiments of the present invention, the coupling hole 242 may communicate with the discharge hole 212 in a direction in which the coupling hole 242 is formed to penetrate.

Accordingly, foreign substances such as electrolyte inside the coupling hole 242 may be easily pushed into the discharge hole 212 inside the coupling hole 242 and removed. As a result, the maintenance cost of the carrier 10 and the manufacturing cost of the battery cell 50 may be reduced as the cleaning of the coupling hole 242 is facilitated.

According to the embodiments of the present invention, the lower plate 110 may include one or more mounting grooves 112 with the one or more battery cells 50 inserted thereinto, respectively. The lower carrier 100 may include one or more pushers 120 disposed in the one or more mounting grooves 112, respectively, each of one or more pushers 120 disposed below each of the one or more battery cells 50 mounted in each of the one or more mounting grooves 112. Each of the one or more pushers 120 may include: a mounting plate 122 disposed below each of the one or more battery cells 50, on which each of the one or more battery cells 50 is mounted, and capable of moving up and down along an inner side surface of each of the one or more mounting grooves 112; and a first elastic member 124 disposed below the mounting plate 122 and capable of applying pressure to the mounting plate 122 in upward direction. The mounting plate 122 may include: a first chamfer C1 formed at an upper outer end portion to be inclined downward toward an outer side.

Accordingly, since the friction between the mounting plate 122 and the inner side surface of the mounting groove 112 is reduced when the mounting plate 122 moves vertically, the mounting plate 122 may be prevented from being caught (stuck) in the mounting groove 112 despite the leaked or diffused electrolyte flowing between the mounting plate 122 and the inner side surface of the mounting groove 112 impedes the vertical movement of the mounting plate 122. As a result, the pressure of the first elastic member 124 may be appropriately transmitted to the battery cell 50 through the mounting plate 122 such that the battery cell 50 and the lower injection port 224 of the hopper 220 may be brought into close contact with each other. Therefore, the electrolyte injection may be performed stably, and the leakage or diffusion of the electrolyte may be prevented or reduced during the electrolyte injection or impregnation.

In addition, even when electrolyte contamination occurs in the one or more pushers 120, the manufacturing process of the battery cell 50 may not need to be halted, the carrier 10 may not need to be cleaned frequently such that the cleaning cycle of the carrier 10 may be extended and cleaning may be facilitated. As a result, the productivity of the battery cell 50 may be improved, and the maintenance cost of the carrier 10 and the manufacturing cost of the battery cell 50 may be reduced.

According to the embodiments of the present invention, the mounting plate 122 may include a second chamfer C2 formed at a lower outer end portion to be inclined upward toward an outer side.

Accordingly, since the friction between the mounting plate 122 and the inner side surface of the mounting groove 112 is reduced when the mounting plate 122 moves vertically, the mounting plate 122 may be prevented from being caught (stuck) in the mounting groove 112 despite the leaked or diffused electrolyte flowing between the mounting plate 122 and the inner side surface of the mounting groove 112 impedes the vertical movement of the mounting plate 122. As a result, the pressure of the first elastic member 124 may be appropriately transmitted to the battery cell 50 through the mounting plate 122 such that the battery cell 50 and the lower injection port 224 of the hopper 220 may be brought into close contact with each other. Therefore, the electrolyte injection may be performed stably, and the leakage or diffusion of the electrolyte may be prevented or reduced during the electrolyte injection or impregnation.

In addition, even when electrolyte contamination occurs in the one or more pushers 120, the manufacturing process of the battery cell 50 may not need to be halted, the carrier 10 may not need to be cleaned frequently such that the cleaning cycle of the carrier 10 may be extended and cleaning may be facilitated. As a result, the productivity of the battery cell 50 may be improved, and the maintenance cost of the carrier 10 and the manufacturing cost of the battery cell 50 may be reduced.

According to the embodiments of the present invention, the lower carrier 100 may include one or more alignment members 130 formed to protrude upward from the lower plate 110. The upper carrier 200 may include one or more alignment holes 250 formed to penetrate up and down through the upper plate 210 and through which the one or more alignment members 130 are inserted or pass, respectively. Each of the one or more alignment members 130 may include: an alignment guide 132 having a cross-sectional area gradually increasing from an upper end toward downward direction; and an alignment fixer 134 extending downward from a lower end of the alignment guide 132 and having a constant cross-sectional area vertically. At least a portion of each of the one or more alignment holes 250 may have a cross-sectional shape and size corresponding to those of each of the alignment fixers 134 and be in contact with each of the alignment fixers 134.

Accordingly, leaked or diffused electrolyte may be prevented or reduced from flowing between the alignment fixer 134 of the alignment member 130 and the inner side surface of the alignment hole 250. As a result, the problem of not being able to separate or stably separate the upper carrier 200 from the lower carrier 100 due to the electrolyte causing the alignment member 130 to be adhered to or caught (stuck) to the inner side surface of the alignment hole 250, or the problem of the alignment member 130 or the alignment hole 250 being damaged, deformed or worn due to applying excessive force to separate the upper carrier 200 from the lower carrier 100 may be solved or alleviated. In addition, it is possible to prevent the alignment hole 250 from being narrowed or blocked by the electrolyte, or to prevent or reduce the degree of the inner side surface of the alignment hole 250 from being sticky, due to the electrolyte. As a result, the problem of not being able to align and couple or stably align and couple the upper carrier 200 with the lower carrier 100, or the problem of damage, deformation or wear of the alignment member 130 or the alignment hole 250 due to applying excessive force to align the upper carrier 200 with the lower carrier 100 may be solved or alleviated.

In addition, even when electrolyte contamination occurs in the alignment member 130 or the alignment hole 250, the manufacturing process of the battery cell 50 may not need to be halted, the carrier 10 may not need to be cleaned frequently such that the cleaning cycle of the carrier 10 may be extended and cleaning may be facilitated. As a result, the productivity of the battery cell 50 may be improved, and the maintenance cost of the carrier 10 and the manufacturing cost of the battery cell 50 may be reduced.

According to the embodiments of the present invention, each of the alignment fixers 134 may be cylindrical and have a circular cross-section. The at least a portion of each of the one or more alignment holes 250 may have a circular cross-sectional shape and size corresponding to those of each of the alignment fixers 134 and be in contact with each of the alignment fixers 134.

Accordingly, since the alignment fixer 134 and the alignment hole 250 are not easily worn out, the alignment fixer 134 and the alignment hole 250 may be maintained with a shape and size corresponding to each other. As a result, leaked or diffused electrolyte may be prevented or reduced from flowing between the alignment fixer 134 of the alignment member 130 and the inner side surface of the alignment hole 250. Thus, the problem of failure or instability in the alignment and coupling or separation of the upper carrier 200 and the lower carrier 100, and the resulting increased wear of the alignment member 130 or the alignment hole 250 may be solved or alleviated.

In addition to the advantageous effects described above, specific effects of the present invention will be described further while describing specific details of the present invention.

### [BRIEF DESCRIPTION OF DRAWINGS]

FIGS. 1 to 5 are a perspective view, a perspective exploded view, a front view, a front exploded view and a plan view illustrating a contamination-resistant battery cell carrier according to an embodiment of the present invention.
FIG. 6 is a cross-sectional view of the battery cell carrier taken along the line 6-6' of FIG. 5.
FIG. 7 is an enlarged perspective view of a portion the battery cell carrier of FIG. 6.
FIG. 8 is a cross-sectional view of battery cell carrier taken along the line 8-8' of FIG. 5.

### [DESCRIPTION OF REFERENCE NUMERALS]

| | | | |
|---|---|---|---|
| 10: | contamination-resistant battery cell carrier | 50: | battery cell |
| 100: | lower carrier | 110: | lower plate |
| 112: | mounting groove | 120: | pusher |
| 122: | mounting plate | 124: | first elastic member |
| C1: | first chamfer | C2: | second chamfer |
| 130: | alignment member | 132: | alignment guide |
| 134: | alignment fixer | 136: | body |
| 138: | second elastic member | 200: | upper carrier |
| 210: | upper plate | 212: | discharge hole |
| 220: | hopper | 222: | upper injection port |
| 224: | lower injection port | 230: | barrier |
| 240: | coupling part | 242: | coupling hole |
| 250: | alignment hole | | |

### [REPRESENTATIVE FIGURE]

### FIG. 1

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

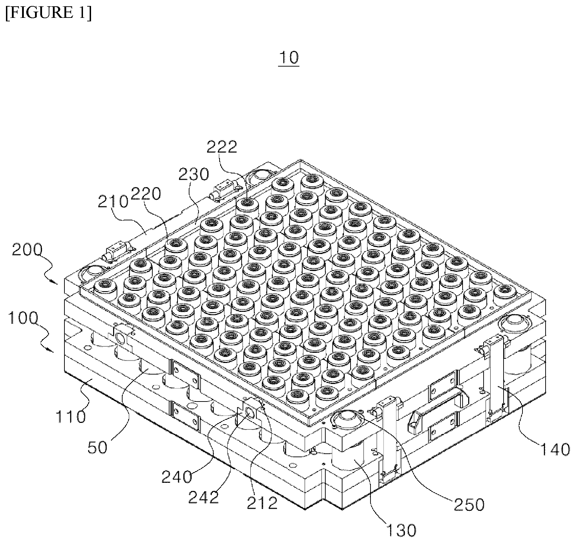

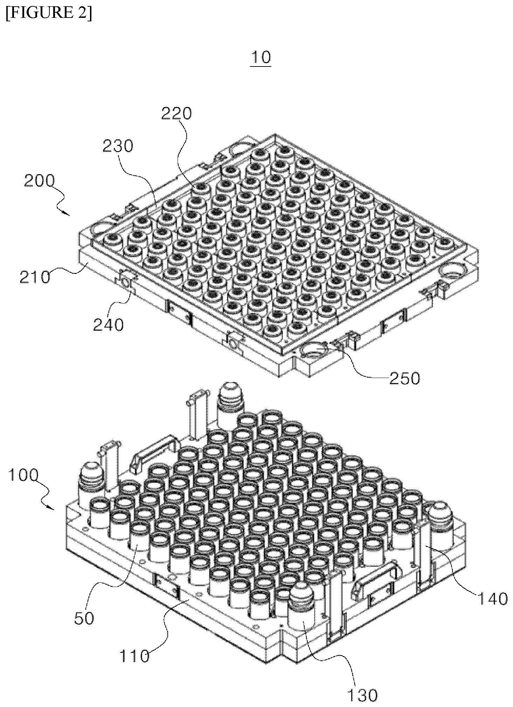

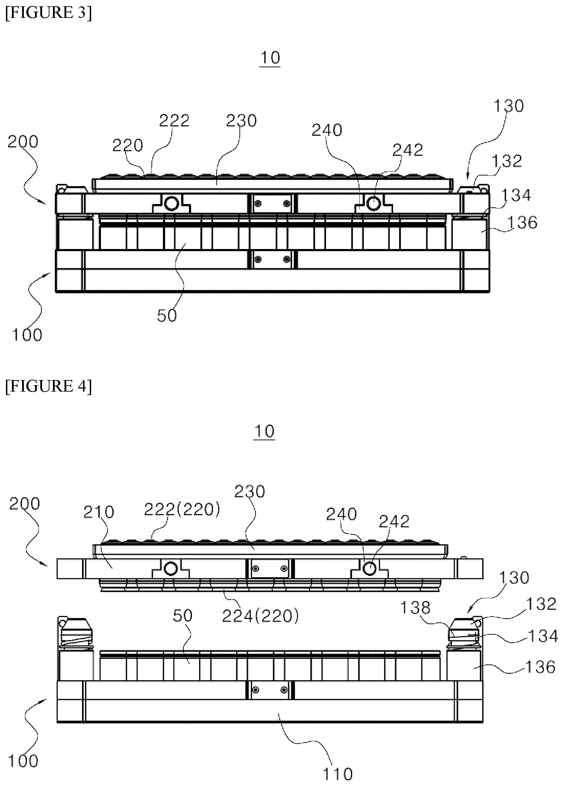

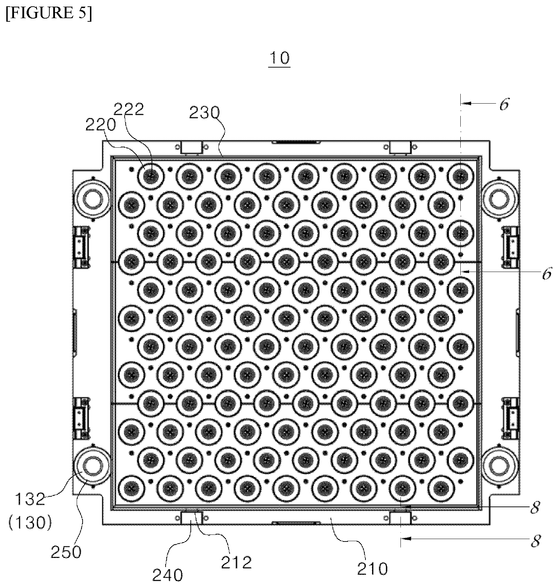

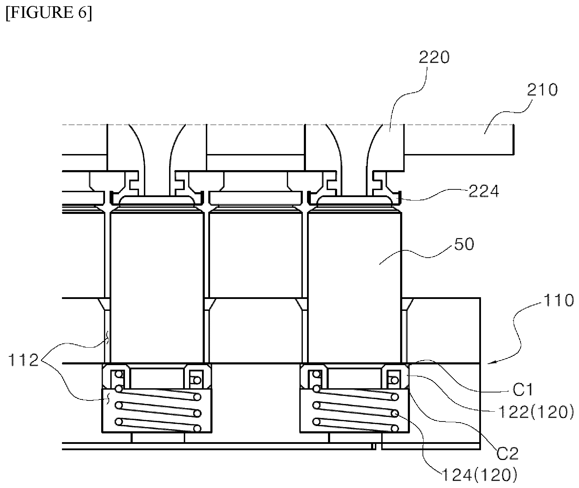

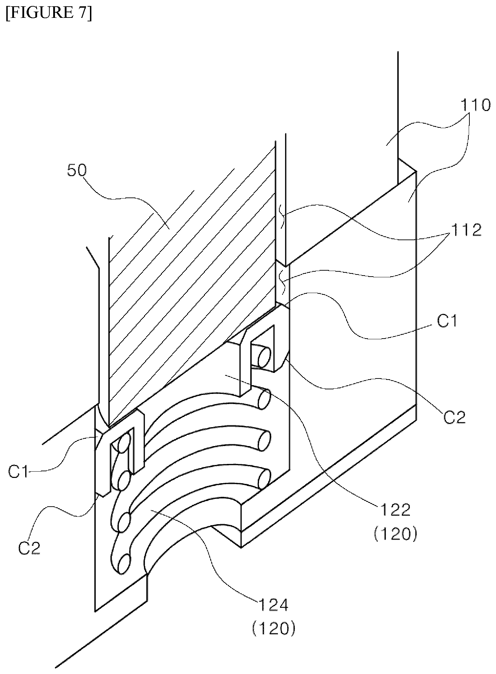

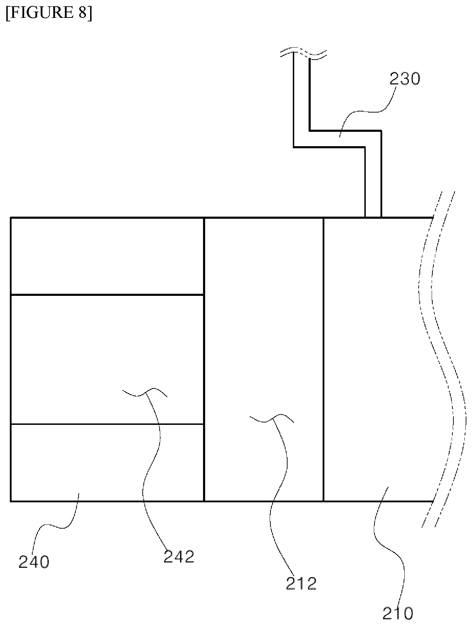

FIGS. 1 to 5 are a perspective view, a perspective exploded view, a front view, a front exploded view and a plan view illustrating a contamination-resistant battery cell carrier according to an embodiment of the present invention. FIG. 6 is a cross-sectional view of the battery cell carrier taken along the line 6-6' of FIG. 5. FIG. 7 is an enlarged perspective view of a portion the battery cell carrier of FIG. 6. FIG. 8 is a cross-sectional view of battery cell carrier taken along the line 8-8' of FIG. 5.

### [CONTAMINATION-RESISTANT BATTERY CELL CARRIER]

Referring to FIGS. 1 to 7, a contamination-resistant battery cell carrier 10 according to an embodiment may include a lower carrier 100 and an upper carrier 200.

The lower carrier 100 may include a lower plate 110. The lower carrier 100 may include one or more pushers 120. The lower carrier 100 may include one or more alignment members 130. The lower carrier 100 may include a fixing part 140.

One or more battery cells 50 may be mounted on the lower plate 110.

The lower plate 110 may include one or more mounting grooves 112 with the one or more battery cells 50 inserted thereinto, respectively (FIGS. 6 and 7).

The one or more pushers 120 may be disposed in the one or more mounting grooves 112, respectively, and each of the one or more pushers 120 may be disposed below each of the one or more battery cells 50 mounted in each of the one or more mounting grooves 112, respectively.

Each of the one or more pushers 120 may include: a mounting plate 122; and a first elastic member 124.

The mounting plate 122 may be disposed below each of the one or more battery cells 50. Each of the one or more battery cells 50 may be mounted on the mounting plate 122. The mounting plate 122 may be capable of moving up and down along an inner side surface of each of the one or more mounting grooves 112. The vertical movement may be performed by the first elastic member 124 described later.

The mounting plate 122 may include a first chamfer C1. The mounting plate 122 may include a second chamfer C2.

The first chamfer C1 may be formed at an upper outer end portion of the mounting plate 122 to be inclined downward toward an outer side thereof.

Accordingly, since the friction between the mounting plate 122 and the inner side surface of the mounting groove 112 is reduced when the mounting plate 122 moves vertically, the mounting plate 122 may be prevented from being caught (stuck) in the mounting groove 112 despite the leaked or diffused electrolyte flowing between the mounting plate 122 and the inner side surface of the mounting groove 112 impedes the vertical movement of the mounting plate 122. As a result, the pressure of the first elastic member 124 may be appropriately transmitted to the battery cell 50 through the mounting plate 122 such that the battery cell 50 and the lower injection port 224 of the hopper 220 may be brought into close contact with each other. Therefore, the electrolyte injection may be performed stably, and the leakage or diffusion of the electrolyte may be prevented or reduced during the electrolyte injection or impregnation.

In addition, even when electrolyte contamination occurs in the one or more pushers 120, the manufacturing process of the battery cell 50 may not need to be halted, the carrier 10 may not need to be cleaned frequently such that the cleaning cycle of the carrier 10 may be extended and cleaning may be facilitated. As a result, the productivity of the battery cell 50 may be improved, and the maintenance cost of the carrier 10 and the manufacturing cost of the battery cell 50 may be reduced.

The second chamfer C2 may be formed at an lower outer end portion of the mounting plate 122 to be inclined upward toward an outer side thereof.

Accordingly, since the friction between the mounting plate 122 and the inner side surface of the mounting groove 112 is reduced when the mounting plate 122 moves vertically, the mounting plate 122 may be prevented from being caught (stuck) in the mounting groove 112 despite the leaked or diffused electrolyte flowing between the mounting plate 122 and the inner side surface of the mounting groove 112 impedes the vertical movement of the mounting plate 122. As a result, the pressure of the first elastic member 124 may be appropriately transmitted to the battery cell 50 through the mounting plate 122 such that the battery cell 50 and the lower injection port 224 of the hopper 220 may be brought into close contact with each other. Therefore, the electrolyte injection may be performed stably, and the leakage or diffusion of the electrolyte may be prevented or reduced during the electrolyte injection or impregnation.

In addition, even when electrolyte contamination occurs in the one or more pushers 120, the manufacturing process of the battery cell 50 may not need to be halted, the carrier 10 may not need to be cleaned frequently such that the cleaning cycle of the carrier 10 may be extended and cleaning may be facilitated. As a result, the productivity of the battery cell 50 may be improved, and the maintenance cost of the carrier 10 and the manufacturing cost of the battery cell 50 may be reduced.

The first elastic member 124 may be disposed below the mounting plate 122. The first elastic member 124 may apply pressure to the mounting plate 122 in upward direction.

The one or more alignment members 130 may be formed to protrude upward from the lower plate 110 (FIGS. 1 to 4).

Each of the one or more alignment members 130 may include: an alignment guide 132; and an alignment fixer 134. Each of the one or more alignment members 130 may include a body 136. Each of the one or more alignment members 130 may include a second elastic member 138.

The alignment guide 132 may have a cross-sectional area gradually increasing from an upper end toward downward direction. The alignment guide 132 may be inserted or pass through the alignment hole 250 described below such that the upper carrier 200 is aligned with and coupled to the lower carrier 100.

The alignment fixer 134 may extend downward from a lower end of the alignment guide 132. The alignment fixer 134 may have a constant cross-sectional area vertically. The upper carrier 200 may be aligned and fixed to the lower carrier 100 with the alignment fixer 134 in contact with the inner side surface of the alignment hole 250. For example, at least a portion of each of the one or more alignment holes 250 described below may have a cross-sectional shape and size corresponding to those of each of the alignment fixers 134. In addition, the at least a portion of each the one or more alignment holes 250 may be in contact with each of the alignment fixers 134.

Accordingly, leaked or diffused electrolyte may be prevented or reduced from flowing between the alignment fixer 134 of the alignment member 130 and the inner side surface of the alignment hole 250. As a result, the problem of not being able to separate or stably separate the upper carrier 200 from the lower carrier 100 due to the electrolyte causing the alignment member 130 to be adhered to or caught (stuck) to the inner side surface of the alignment hole 250, or the problem of the alignment member 130 or the alignment hole 250 being damaged, deformed or worn due to applying excessive force to separate the upper carrier 200 from the lower carrier 100 may be solved or alleviated. In addition, it is possible to prevent the alignment hole 250 from being narrowed or blocked by the electrolyte, or to prevent or reduce the degree of the inner side surface of the alignment hole 250 from being sticky, due to the electrolyte. As a result, the problem of not being able to align and couple or stably align and couple the upper carrier 200 with the lower carrier 100, or the problem of damage, deformation or wear of the alignment member 130 or the alignment hole 250 due to applying excessive force to align the upper carrier 200 with the lower carrier 100 may be solved or alleviated.

In addition, even when electrolyte contamination occurs in the alignment member 130 or the alignment hole 250, the manufacturing process of the battery cell 50 may not need to be halted, the carrier 10 may not need to be cleaned frequently such that the cleaning cycle of the carrier 10 may be extended and cleaning may be facilitated. As a result, the productivity of the battery cell 50 may be improved, and the maintenance cost of the carrier 10 and the manufacturing cost of the battery cell 50 may be reduced.

Each of the alignment fixers 134 may be cylindrical and have a circular cross-section. Here, the at least a portion of each of the one or more alignment holes 250 may have a cross-sectional shape and size corresponding to those of each of the alignment fixers 134 and be in contact with each of the alignment fixers 134.

Accordingly, since the alignment fixer 134 and the alignment hole 250 are not easily worn out, the alignment fixer 134 and the alignment hole 250 may be maintained with a shape and size corresponding to each other. As a result, leaked or diffused electrolyte may be prevented or reduced from flowing between the alignment fixer 134 of the alignment member 130 and the inner side surface of the alignment hole 250. Thus, the problem of failure or instability in the alignment and coupling or separation of the upper carrier 200 and the lower carrier 100, and the resulting increased wear of the alignment member 130 or the alignment hole 250 may be solved or alleviated.

The body 136 may be disposed below the alignment fixer 134. The body 136 may extend vertically. The body 136 may be coupled to the lower plate 110. The cross-sectional area of the body 136 may be larger than that of the alignment fixer 134. The body 136 may support the upper carrier 200.

The second elastic member 138 may be installed at the body 136. At least a portion of the second elastic member 138 may be positioned above the body 136. The second elastic member 138 may at least partially surround the alignment fixer 134.

The second elastic member 138 may apply pressure to the upper carrier 200 in upward direction. As a result, when the fixing part 140 is a hook as shown, the fixing part 140 may be maintained in a state of being coupled to the upper carrier 200 by the second elastic member 138. In addition, the hopper 220 of the upper carrier 200 may be in contact with the electrolyte injector by the second elastic member 138. In addition, the shock may be absorbed by the second elastic member 138.

The fixing part 140 may be a hook. The fixing part 140 may be coupled to the upper carrier 200. The lower carrier 100 and the upper carrier 200 may be coupled to each other by the fastening of the fixing part 140.

The upper carrier 200 may include: an upper plate 210; and one or more hoppers 220. The upper carrier 200 may include a barrier 230. The upper carrier 200 may include one or more alignment holes 250.

The upper plate 210 may be disposed above the lower carrier 100 and the one or more battery cells 50. The upper plate 210 may be coupled to the lower carrier 100.

The one or more hoppers 220 may be disposed through the upper plate 210. The one or more hoppers 220 may be in contact with the one or more battery cells 50, respectively.

Each of the one or more hoppers 220 may be open vertically. Each of the one or more hoppers 220 may include an upper injection port 222 and a lower injection port 224.

The upper injection port 222 may be in contact with the electrolyte injector.

The lower injection port 224 may be in contact with each of the one or more battery cells 50.

As a result, through each of the one or more hoppers 220, an electrolyte is injected into each of the one or more battery cells 50, or the electrolyte in each of the one or more battery cells 50 leaks or diffuses out of each of the one or more battery cells 50.

For example, when injecting electrolyte into the battery cell 50, the electrolyte may leak or diffuse due to lack of sealing between the upper injection port 222 and the electrolyte injector or between the lower injection port 224 and the battery cell 50.

In addition, when the carrier 10 is placed in the chamber for injection of the electrolyte into the battery cell 50 or for electrolyte impregnation of the battery cell 50 and the internal pressure of the chamber is increased or decreased to increase or decrease the internal pressure of the battery cell 50, the electrolyte may leak or diffuse.

The barrier 230 may be formed to protrude upward from the upper plate 210.

The barrier 230 may surround the one or more hoppers 220 as a whole.

Accordingly, even if the electrolyte leaks or diffuses on the upper surface of the upper plate 210 when the electrolyte is injected into the battery cell 50 or the inside of the battery cell 50 is pressurized or depressurized, most of the leaked or diffused electrolyte gathers inside the barrier 230 such that the major area contaminated with the electrolyte may be limited and controlled. As a result, even when the electrolyte contamination occurs, the manufacturing process of the battery cell 50 may not need to be halted, the carrier 10 may not need to be cleaned frequently such that the cleaning cycle of the carrier 10 may be extended and cleaning may be facilitated. As a result, the productivity of the battery cell 50 may be improved, and the maintenance cost of the carrier 10 and the manufacturing cost of the battery cell 50 may be reduced.

In addition, the major area contaminated with the electrolyte may be limited to a certain area (e.g., inside the barrier 230) that is not affected by the electrolyte contamination, the problems caused by the electrolyte contamination may not occur or may be reduced despite the leakage or diffusion of the electrolyte. For example, problems such as failure or instability in the coupling/separation of the carrier 10 and the transport apparatus, weakening of the adhesion between the battery cell 50 and the hopper 220, failure or instability in the separation of the upper carrier 200, or increased wear of the alignment member 130 or the alignment hole 250 due to failure or instability in the separation of the upper carrier 200, due to electrolyte contamination, may not occur.

In addition, since the barrier 230 is formed to surround the one or more hoppers 220 as a whole, the area around the upper injection port 222 of each the one or more hoppers 220 where electrolyte leakage frequently occurs, may be easily isolated at low cost with a simple configuration, and the spread of electrolyte contamination may be effectively prevented.

Meanwhile, the lower carrier 100 or the upper carrier 200 may include a coupling part 240. For example, the upper carrier 200 may include a coupling part 240 as shown.

The coupling part 240 may be disposed at an edge of the lower plate 110 or the upper plate 210. The coupling part 240 may be configured to couple to an external transport apparatus.

Referring further to FIG. 8, the lower plate 110 or the upper plate 210 may include a discharge hole 212 formed inner than the coupling part 240 and open vertically. The discharge hole 212 may be a groove (notch) recessed inward from the outer surface of the lower plate 110 or the upper plate 210, or a through-hole formed to penetrate vertically and disposed inner than the edge of the lower plate 110 or the upper plate 210. For example, the discharge hole 212 may be a groove (notch) as shown (FIGS. 1, 2, 5 and 8).

Accordingly, the electrolyte leaked or diffused from the inner side of the lower plate 110 or the upper plate 210 (e.g., the lower injection port 224 or the upper injection port 222) may be easily discharged out of the carrier 10 through the discharge hole 212 formed inner than the coupling part 240. As a result, the coupling or separation of the carrier 10 and the transport apparatus may be prevented from failing or becoming unstable since the electrolyte contamination of the coupling part 240 may be prevented or the degree of electrolyte contamination of the coupling part 240 may be reduced.

In addition, even when electrolyte contamination occurs in the coupling part 240 or its surroundings, the manufacturing process of the battery cell 50 may not need to be halted, the carrier 10 may not need to be cleaned frequently such that the cleaning cycle of the carrier 10 may be extended and cleaning may be facilitated. As a result, the productivity of the battery cell 50 may be improved, and the maintenance cost of the carrier 10 and the manufacturing cost of the battery cell 50 may be reduced.

The coupling part 240 may include a coupling hole 242.

The coupling hole 242 may be formed to penetrate in a direction intersecting the vertical direction (e.g., horizontal direction). The coupling hole 242 may be formed to penetrate in a direction extending from an outer side to an inner side of the lower plate 110 or the upper plate 210.

The coupling hole 242 may communicate with the discharge hole 212.

Accordingly, even when leaked or diffused electrolyte flows into the coupling hole 242 of the coupling part 240, the electrolyte may be easily discharged out of the carrier 10 through the discharge hole 212. As a result, the coupling hole 242 may be prevented from being narrowed or blocked by the electrolyte, or the inner side surface of the coupling hole 242 may be prevented from being sticky due to the electrolyte, or the degree of such may be reduced. Accordingly, the coupling or separation of the carrier 10 and the transport apparatus may be prevented from failing or becoming unstable.

In addition, even when electrolyte contamination occurs in the coupling hole 242, the manufacturing process of the battery cell 50 may not need to be halted, the carrier 10 may not need to be cleaned frequently such that the cleaning cycle of the carrier 10 may be extended and cleaning may be facilitated. As a result, the productivity of the battery cell 50 may be improved, and the maintenance cost of the carrier 10 and the manufacturing cost of the battery cell 50 may be reduced.

In addition, foreign substances such as electrolyte inside the coupling hole 242 may be easily removed by pushing the foreign substances into the discharge hole 212 inside the coupling hole 242. As a result, since cleaning of the coupling hole 242 is facilitated, the maintenance cost of the carrier 10 and the manufacturing cost of the battery cell 50 may be reduced.

The coupling hole 242 may communicate with the discharge hole 212 in a direction in which the coupling hole 242 is formed to penetrate.

Accordingly, foreign substances such as electrolyte inside the coupling hole 242 may be easily pushed into the discharge hole 212 inside the coupling hole 242 and removed. As a result, the maintenance cost of the carrier 10 and the manufacturing cost of the battery cell 50 may be reduced as the cleaning of the coupling hole 242 is facilitated.

The one or more alignment holes 250 may be formed to penetrate up and down through the upper plate 210. The one or more alignment members 130 may be inserted or pass through the one or more alignment holes 250, respectively.

At least a portion of each of the one or more alignment holes 250 may have a cross-sectional shape and size corresponding to those of the alignment fixer 134. The at least a portion of each of the one or more alignment holes 250 may be in contact with each of the alignment fixers 134.

As described above, when each of the alignment fixers 134 is cylindrical and has a circular cross-section, the at least a portion of each of the one or more alignment holes 250 may have a circular cross-sectional shape and size corresponding to those of each of the alignment fixers 134 and be in contact with each of the alignment fixer 134.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A contamination-resistant battery cell carrier, comprising:
a lower carrier 100 comprising a lower plate 110 where one or more battery cells 50 are mounted; and
an upper carrier 200 comprising: an upper plate 210 disposed above the lower carrier 100 and the one or more battery cells 50 and coupled to the lower carrier 100; one or more hoppers 220 disposed through the upper plate 210 in contact with the one or more battery cells 50, respectively; and a barrier 230 formed to protrude upward from the upper plate 210,
wherein each of the one or more hoppers 220 is open vertically and comprises: an upper injection port 222 in contact with an electrolyte injector; and a lower injection port 224 in contact with each of the one or more battery cells 50,
whereby through each of the one or more hoppers 220, an electrolyte is injected into each of the one or more battery cells 50, or the electrolyte in each of the one or more battery cells 50 leaks or diffuses out of each of the one or more battery cells 50, and
wherein the barrier 230 surrounds the one or more hoppers 220 as a whole.

2. A contamination-resistant battery cell carrier, comprising:
a lower carrier 100 comprising a lower plate 110 where one or more battery cells 50 are mounted; and
an upper carrier 200 comprising: an upper plate 210 disposed above the lower carrier 100 and the one or more battery cells 50 and coupled to the lower carrier 100; and one or more hoppers 220 disposed through the upper plate 210 in contact with the one or more battery cells 50, respectively,
wherein each of the one or more hoppers 220 is open vertically and comprises: an upper injection port 222 in contact with an electrolyte injector; and a lower injection port 224 in contact with each of the one or more battery cells 50,
whereby through each of the one or more hoppers 220, an electrolyte is injected into each of the one or more battery cells 50, or the electrolyte in each of the one or more battery cells 50 leaks or diffuses out of each of the one or more battery cells 50,
wherein the lower carrier 100 or the upper carrier 200 comprises: a coupling part 240 disposed at an edge of the lower plate 110 or the upper plate 210 and configured to couple to a transport apparatus, and
the lower plate 110 or the upper plate 210 comprises: a discharge hole 212 formed inner than the coupling part 240 and open in a vertical direction.

3. The contamination-resistant battery cell carrier of claim 2, wherein the coupling part 240 includes a coupling hole 242 formed to penetrate in a direction intersecting the vertical direction and extending from an outer side to an inner side of the lower plate 110 or the upper plate 210, and the coupling hole 242 communicates with the discharge hole 212.

4. The contamination-resistant battery cell carrier of claim 3, wherein the coupling hole 242 communicates with the discharge hole 212 in a direction in which the coupling hole 242 is formed to penetrate.

5. The contamination-resistant battery cell carrier of any one of claims 1 to 4, wherein the lower plate 110 comprises one or more mounting grooves 112 with the one or more battery cells 50 inserted thereinto, respectively,
the lower carrier 100 comprises one or more pushers 120 disposed in the one or more mounting grooves 112, respectively, each of the one or more pushers 120 disposed below each of the one or more battery cells 50 mounted in each of the one or more mounting grooves 112,
each of the one or more pushers 120 comprises: a mounting plate 122 disposed below each of the one or more battery cells 50, on which each of the one or more battery cells 50 is mounted, and capable of moving up and down along an inner side surface of each of the one or more mounting grooves 112; and a first elastic member 124 disposed below the mounting plate 122 and capable of applying pressure to the mounting plate 122 in upward direction, and
the mounting plate 122 comprises: a first chamfer C1 formed at an upper outer end portion to be inclined downward toward an outer side.

6. The contamination-resistant battery cell carrier of claim 5, wherein the mounting plate 122 comprises a second chamfer C2 formed at a lower outer end portion to be inclined upward toward an outer side.

7. The contamination-resistant battery cell carrier of any one of claims 1 to 6, wherein the lower carrier 100 comprises one or more alignment members 130 formed to protrude upward from the lower plate 110,
the upper carrier 200 comprises one or more alignment holes 250 formed to penetrate up and down through the upper plate 210 and through which the one or more alignment members 130 are inserted or pass, respectively,
each of the one or more alignment members 130 comprises: an alignment guide 132 having a cross-sectional area gradually increasing from an upper end toward downward direction; and an alignment fixer 134 extending downward from a lower end of the alignment guide 132 and having a constant cross-sectional area vertically,
at least a portion of each of the one or more alignment holes 250 has a cross-sectional shape and size corresponding to those of each of the alignment fixers 134 and is in contact with each of the alignment fixers 134.

8. The contamination-resistant battery cell carrier of claim 7, wherein each of the alignment fixers 134 is cylindrical and has a circular cross-section, and
the at least a portion of each of the one or more alignment holes 250 has a circular cross-sectional shape and size corresponding to those of each of the alignment fixers 134 and is in contact with each of the alignment fixers 134.
